# EUROPEAN PATENT APPLICATION

(11) **EP 4 796 589 A1**
(43) Date of publication of application: **26.08.2026**
(21) Application number: 24879775.5
(22) Date of filing: 17.10.2024
(51) Int. Cl.: C08L 23/02, C08K 5/09, C08L 23/26, C08L 29/04

(54) **RESIN COMPOSITION**

(30) Priority: 20.10.2023 JP 2023181049
(71) Applicant: Mitsubishi Chemical Corporation, Tokyo 100-8251 (JP)
(72) Inventor: FUKAMACHI, Yuya, Tokyo 100-8251 (JP); TANIGUCHI, Masahiko, Tokyo 100-8251 (JP)
(74) Representative: Vossius & Partner Patentanwälte Rechtsanwälte mbB
(86) International application number: PCT/JP2024/037000
(87) International publication number: WO 2025/084354

(57) **Abstract**

A resin composition containing a polyolefin-based resin and a polyvinyl alcohol-based resin is provided, the resin composition being less likely to be colored and thermally decomposed. The resin composition contains a polyolefin-based resin (A), a polyvinyl alcohol-based resin (B), and acetic acid (C), a content of the acetic acid (C) being 60 mass ppm or greater.

## Description

### Technical Field

The present invention relates to a resin composition.

### Background Art

In the related art, resin films containing a polyamide-based resin, a polyester-based resin, a polyolefin-based resin, or the like have been used as materials for packaging. As a packaging material of articles whose quality may be deteriorated due to oxygen, such as foods and beverages, pharmaceuticals, and chemicals, a single film of the resin described above cannot provide adequate oxygen gas barrier properties, and thus a laminate in which a material having oxygen gas barrier properties is composited by coating, laminating, coextrusion molding, or the like has been widely used.

As such a laminate, for example, a multilayer film obtained by coextrusion molding of a polyvinyl alcohol-based resin (hereinafter, also referred to as "PVA-based resin") and a polyolefin-based resin has been used (Patent Document 1).

Meanwhile, use as a resin composition, in which a polyolefin-based resin and a polyvinyl alcohol-based resin are mixed, constituting each layer of such a laminate has been also known (Patent Document 2).

### Citation List

### Patent Literature

Patent Document 1: JP 4883281 B
Patent Document 2: JP 2007-126586 A

### Summary of Invention

### Technical Problem

As described above, a multilayer film in which layers containing resins that are different from each other are laminated is useful because characteristics of the resins contained in the layers can be exhibited. In recent years, in place of the multilayer film having layers containing resins that are different from each other, production of a film made of a resin composition obtained by mixing resins that are different from each other has been studied.

For example, in the case where a PVA-based resin is added to a polyolefin-based resin, a resin composition that can provide a film having surface activity performance, mechanical properties, and gas barrier properties of the PVA-based resin in addition to the properties exhibited by the polyolefin-based resin can be formed. However, the obtained resin composition caused problems originated from the PVA-based resin such as coloration due to increase in yellow index (hereinafter, also referred to as "YI") and lowering of decomposition temperature, and these problems cause deterioration in functions of a film obtained from the resin composition.

An object of the present invention is to provide a resin composition containing a polyolefin-based resin and a polyvinyl alcohol-based resin, the resin composition being less likely to be colored and thermally decomposed.

### Solution to Problem

As a result of diligent research in light of such circumstances, surprisingly, the inventors of the present invention found that a resin composition that is less likely to be colored and thermally decomposed can be obtained by allowing the resin composition containing a polyolefin-based resin and a polyvinyl alcohol-based resin to further contain a predetermined amount of acetic acid, and thus completed the present invention.

That is, the present invention includes the following aspects.

A first aspect of the present invention relates to a resin composition containing a polyolefin-based resin (A), a polyvinyl alcohol-based resin (B), and acetic acid (C), a content of the acetic acid (C) being 60 mass ppm or greater.

A second aspect of the present invention relates to the resin composition of the first aspect, where the polyolefin-based resin (A) contains polyethylene or polypropylene.

A third aspect of the present invention relates to the resin composition of the first aspect or the second aspect, where the polyvinyl alcohol-based resin (B) contains a modified polyvinyl alcohol-based resin.

A fourth aspect of the present invention relates to the resin composition of any one of the first aspect to the third aspect, further containing an acid-modified polyolefin-based resin (D).

A fifth aspect of the present invention relates to the resin composition of any one of the first aspect to the fourth aspect, where the content of the acetic acid (C) is 200 mass ppm or less.

A sixth aspect of the present invention relates to the resin composition of any one of the first aspect to the fourth aspect, where the content of the acetic acid (C) is 150 mass ppm or less.

### Advantageous Effects of Invention

The resin composition of the present invention is less likely to be colored and thermally decomposed.

### Description of Embodiments

The resin composition according to the present embodiment is explained in detail below, but these descriptions are merely examples of preferred embodiments and are not intended to limit the scope of the invention.

Note that, in the present specification, "part" means "parts by mass" unless otherwise noted.

The resin composition according to the present embodiment contains a polyolefin-based resin (A), a polyvinyl alcohol-based resin (B), and acetic acid (C), and the content of the acetic acid (C) is 60 mass ppm or greater.

The reasons why coloration and thermal decomposition are less likely to occur by allowing the resin composition according to the present embodiment to contain the predetermined amount of acetic acid (C) are not clear; however, the following reasons are thought.

Because the polyvinyl alcohol-based resin is hydrophilic, unless it is in a completely moistureproof packaging, the polyvinyl alcohol-based resin absorbs moisture. The moisture thereof exhibits effects in which the latent heat of vaporization suppresses increase in resin temperature caused by shear heating when the moisture is heated and volatilized by extrusion molding, and thus thermal history is reduced. However, because the boiling point of water is 100°C, when the resin temperature during kneading exceeds 100°C, the moisture is completely volatilized, and thus the resin temperature increases. When the acetic acid is added to the resin composition, because the acetic acid has a boiling point higher than that of water, even after the resin temperature exceeds 100°C, the acetic acid remains in the resin, and thus increase in the resin temperature can be suppressed due to latent heat of vaporization. It is conceived that, by this, thermal history of the resin composition is reduced and, as a result of YI being reduced, the effect of less coloring is achieved. Furthermore, it is conceived that, due to similar reasons, the resin composition is less likely to undergo thermal decomposition.

As described below, the resin composition according to the present embodiment can further contain an acid-modified polyolefin-based resin (D). The content ratio of the polyolefin-based resin (A) to the polyvinyl alcohol-based resin (B) to the acid-modified polyolefin-based resin (D) in the resin composition, in terms of mass ratio, is from 70 to 99:from 15 to 1:from 15 to 0, and more preferably from 80 to 97:from 10 to 2:from 10 to 1. This content ratio is advantageous in that less coloring occurs and thermal decomposition is less likely to occur.

Note that, in the resin composition, the polyolefin-based resin (A) and the polyvinyl alcohol-based resin (B), and the acid-modified polyolefin-based resin (D) described above are contained as resins that are different from each other.

### Polyolefin-Based Resin (A)

Examples of the polyolefin-based resin (A) include polyolefin-based resins in a broad sense including homopolymers and copolymers of olefins and blended materials of these, such as polyethylenes such as linear low-density polyethylene (LLDPE), low-density polyethylene (LDPE), very-low-density polyethylene (VLDPE), medium-density polyethylene (MDPE), and high-density polyethylene (HDPE), ethylene-vinyl acetate copolymers (EVA), ionomers, ethylene-propylene (block or random) copolymers, ethylene-acrylate copolymers, ethylene-methacrylate copolymers, polypropylene, propylene-α-olefin (α-olefin having from 4 to 20 carbons) copolymers, polybutene, polypentene, and polymethylpentene.

Note that the acid-modified polyolefin-based resin is not included in the polyolefin-based resin (A).

Among these, as the polyolefin-based resin (A), from the viewpoints of economical efficiency and mechanical properties, polyethylene or polypropylene is preferred, and polypropylene is particularly preferred. That is, the polyolefin-based resin (A) preferably contains polyethylene or polypropylene, and particularly preferably contains polypropylene.

As the polyethylene, a linear low-density polyethylene made of an ethylene-α-olefin copolymer and having a density of 0.86 to 0.95 g/cm³ is preferably used. The density of 0.86 g/cm³ or greater is preferred because various mechanical properties of a laminate packaging material become good and blocking is less likely to occur. Furthermore, the density of 0.95 g/cm³ or less is preferred because bending fatigue resistance, vibration fatigue resistance, and the like become good. Note that the density herein is a value measured at 20°C in accordance with JIS K 6760, and ethylene-α-olefin is a copolymer of ethylene and butene-1, pentene-1,4-methylpentene-1, hexene-1, octene-1, or the like and has 18 or less carbons. Among these, an ethylene-α-olefin copolymer using an olefin having from 4 to 8 carbons is suitably used.

As the linear low-density polyethylene described above, an ethylene-α-olefin copolymer produced in the presence of a single-site catalyst is more preferred. A single-site catalyst is different from a multi-site catalyst such as existing Ziegler catalyst and Phillips catalyst having uneven active sites but is a catalyst characterized by even active sites (single site). Representative examples of the single-site catalyst include metallocene-based catalysts. Examples of specific product names of the single-site catalysts include "Kernel^{™}" (available from Japan Polychem Corporation), "Evolue^{™}" (available from Mitsui Chemicals, Inc.), "Exact^{™}" (available from Exxon Chemical Ltd.), and "AFFINITY^{™}" (available from The Dow Chemical Company).

The melting point of the polyolefin-based resin (A) is preferably from 100 to 190°C, more preferably from 100 to 180°C, and particularly preferably from 100 to 170°C. The melting point is measured by differential scanning calorimetry (hereinafter, abbreviated as "DSC") in accordance with JIS K 7121.

The melt flow rate (MFR) (in accordance with JIS K 7210; 230°C; load: 21.2 N) of the polyolefin-based resin (A) is preferably from 0.1 to 50 g/10 min, and more preferably approximately from 0.5 to 30 g/10 min.

The lower limit of the content of the polyolefin-based resin (A) in the resin composition is not particularly limited but, from the viewpoint of moldability, the lower limit is preferably 70 mass% or greater, more preferably 80 mass% or greater, and particularly preferably 85 mass% or greater. Furthermore, the upper limit of the content of the polyolefin-based resin (A) in the resin composition is not particularly limited but, from the viewpoint of functionality, the upper limit is preferably 99 mass% or less, more preferably 98 mass% or less, and particularly preferably 97 mass% or less.

### Polyvinyl Alcohol-Based Resin (PVA-Based Resin) (B)

In general, a polyvinyl alcohol-based resin is a resin obtained by saponifying a homopolymer of a vinyl ester-based monomer or a copolymer of a vinyl ester-based monomer and another monomer (hereinafter, these are referred to as "vinyl ester-based polymer") using an alkali catalyst or the like.

From the viewpoint of extrusion moldability, the polyvinyl alcohol-based resin (B) preferably contains a modified polyvinyl alcohol-based resin, and is more preferably made of a modified polyvinyl alcohol-based resin. A modified polyvinyl alcohol-based resin is a resin obtained by introducing a modification group into a resin, which mainly contains a vinyl alcohol structural unit obtained by saponifying a polyvinyl ester-based resin obtained by polymerizing a vinyl ester-based compound, by copolymerization, post reaction, or the like. The modified polyvinyl alcohol-based resin contains an unsaturated monomer structural unit by copolymerization or a structural unit by post-reaction in addition to a vinyl alcohol structural unit equivalent to the degree of saponification and a vinyl ester structural unit remained without being saponified.

Examples of the vinyl ester-based compound described above include vinyl formate, vinyl acetate, vinyl trifluoroacetate, vinyl propionate, vinyl butyrate, vinyl caprate, vinyl laurate, vinyl versatate, vinyl palmitate, vinyl stearate, and the like. Vinyl acetate is preferably used. The vinyl ester-based compounds can be used alone or in combination of two or more types.

Examples of the modified polyvinyl alcohol-based resin by copolymerization (copolymerization modified polyvinyl alcohol-based resin) include those obtained by copolymerization of a vinyl ester-based monomer and an unsaturated monomer that is copolymerizable with the vinyl ester-based monomer, such as olefins, such as ethylene, propylene, isobutylene, α-octene, α-dodecene, and α-octadecene; unsaturated acids, such as acrylic acid, methacrylic acid, crotonic acid, maleic acid, maleic anhydride, and itaconic acid, and salts thereof or monoesters or di-alkyl esters thereof; nitriles, such as acrylonitrile and methacrylonitrile; amides, such as acrylamide and methacrylamide; olefin sulfonic acids, such as ethylenesulfonic acid, allylsulfonic acid, and methallylsulfonic acid, or salts thereof; alkyl vinyl ethers, N-acrylamide methyltrimethylammonium chloride, allyltrimethylammonium chloride, dimethylallyl vinyl ketone, N-vinylpyrrolidone, vinyl chloride, vinylidene chloride, polyoxyalkylene (meth)allyl ethers, such as polyoxyethylene (meth)allyl ether and polyoxypropylene (meth)allyl ether; polyoxyalkylene (meth)acrylates, such as polyoxyethylene (meth)acrylate and polyoxypropylene (meth)acrylate; polyoxyalkylene (meth)acrylamides, such as polyoxyethylene (meth)acrylamide and polyoxypropylene (meth)acrylamide; polyoxyethylene (1-(meth)acrylamide-1,1-dimethylpropyl)ester, polyoxyethylene vinyl ether, polyoxypropylene vinyl ether, polyoxyethylene allylamine, polyoxypropylene allylamine, polyoxyethylene vinylamine, polyoxypropylene vinylamine, hydroxy group-containing α-olefins, such as 3-buten-1-ol, 4-penten-1-ol, and 5-hexen-1-ol, and derivatives thereof, such as acylated products thereof.

Furthermore, examples of the modified polyvinyl alcohol-based resin by post-reaction (post-modification polyvinyl alcohol-based resin) include those obtained by reacting a polyvinyl alcohol-based resin with a substance having an acetoacetyl group formed by a reaction with a diketene, a substance having a polyalkyleneoxide group formed by a reaction with ethylene oxide, a substance having a hydroxyalkyl group formed by a reaction with an epoxy compound or the like, or an aldehyde compound having various functional groups by esterification, acetalization, urethanization, etherification, grafting, phosphoric acid esterification, or oxyalkylenation.

Furthermore, as the modified polyvinyl alcohol-based resin, a modified polyvinyl alcohol-based resin having a 1,2-diol structure is preferred, and a modified polyvinyl alcohol-based resin having a 1,2-diol structural unit represented by General Formula (1) below is more preferred. In General Formula (1), R¹, R², and R³ each independently represent a hydrogen atom or an alkyl group having from 1 to 4 carbons, X represents a single bond or a bonding chain, and R⁴, R⁵, and R⁶ each independently represent a hydrogen atom or an alkyl group having from 1 to 4 carbons.

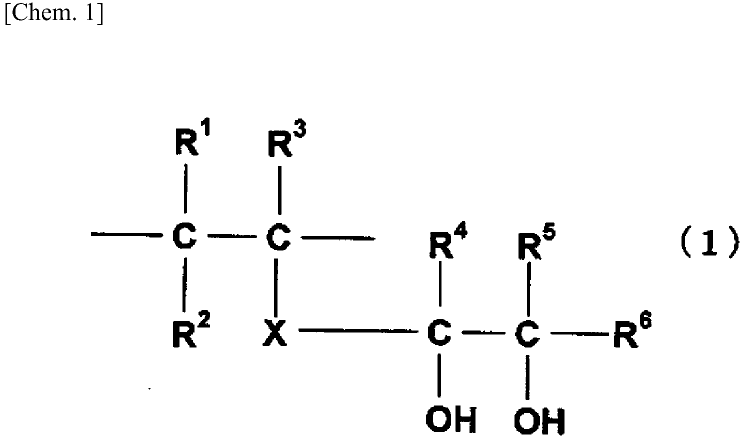

In particular, a modified polyvinyl alcohol-based resin in which all of R¹ to R³ and R⁴ to R⁶ in the 1,2-diol structural unit represented by General Formula (1) are hydrogen atoms and X is a single bond is the most preferred, and a modified polyvinyl alcohol-based resin having a structural unit represented by General Formula (1') below is suitably used.

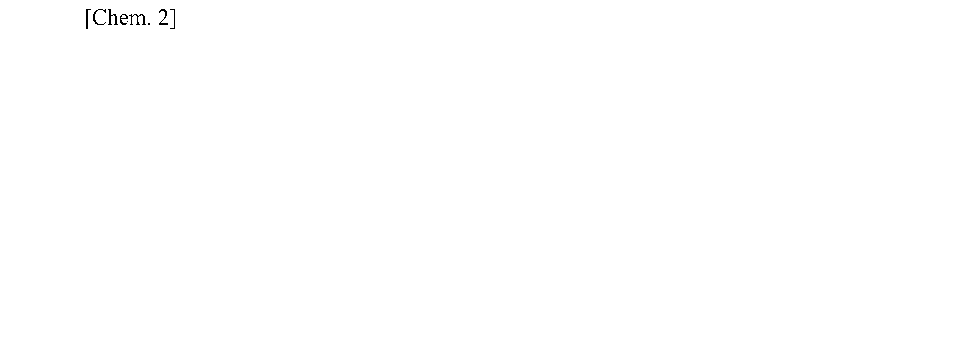

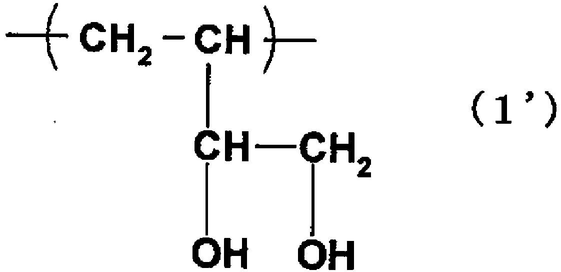

Note that R¹ to R³ and R⁴ to R⁶ in the structural unit represented by General Formula (1) may be each an alkyl group having from 1 to 4 carbons unless the amount thereof significantly impairs the resin characteristics. Examples of the alkyl group having from 1 to 4 carbons include a methyl group, an ethyl group, an n-propyl group, an isopropyl group, an n-butyl group, an isobutyl group, and a tert-butyl group. As necessary, the alkyl group having from 1 to 4 carbons may have a functional group such as a halogen group, a hydroxy group, an ester group, a carboxylic acid group, or a sulfonic acid group.

Furthermore, X in the 1,2-diol structural unit represented by General Formula (1) is the most preferably a single bond from the viewpoint of thermal stability and stability under high temperatures or acidic conditions, and may be a bonding chain as long as the effect of the present invention is not impaired. Examples of the bonding chain include hydrocarbons, such as alkylenes, alkenylenes, alkynylenes, phenylenes, and naphthylenes (these hydrocarbons may be substituted with a halogen atom, such as a fluorine atom, a chlorine atom, or a bromine atom), as well as -O-, -(CH₂O)ₘ-, -(OCH₂)ₘ-, -(CH₂O)ₘCH₂-, -CO-, -COCO-, -CO(CH₂)ₘCO-, - CO(C₆H₄)CO-, -S-, -CS-, -SO-, -SO₂-, -NR-, -CONR-, -NRCO-, -CSNR-, -NRCS-, -NRNR-, - HPO₄-, -Si(OR)₂-, -OSi(OR)₂-, -OSi(OR)₂O-, -Ti(OR)₂-, -OTi(OR)₂-, -OTi(OR)₂O-, -Al(OR)-, - OAl(OR)-, and -OAl(OR)O- (R is each independently a freely chosen substituent and is preferably a hydrogen atom or an alkyl group, and m is a natural number). Among these, from the viewpoint of stability during production or use, an alkylene group having 6 or less carbons is preferred, and a methylene group or -CH₂OCH₂- is particularly preferred.

Examples of the modified polyvinyl alcohol-based resin having the 1,2-diol structure include Nichigo G-Polymer^{™} (available from Mitsubishi Chemical Corporation). For example, the Nichigo G-Polymer^{™} can be produced by the method described in the paragraphs [0026] to [0034] of JP 2015-143356 A.

The content of the 1,2-diol structural unit in the modified polyvinyl alcohol-based resin containing the 1,2-diol structural unit can be determined from the ¹H-NMR spectrum of the completely saponified modified polyvinyl alcohol-based resin (solvent: DMSO-d6, internal standard: tetramethylsilane). Specifically, the content can be calculated from the peak area originated from hydroxy group protons, methine protons, and methylene protons in the 1,2-diol units, the methylene protons in the main chain, the protons of the hydroxy groups linked to the main chain, and the like.

The degree of modification of the modified polyvinyl alcohol-based resin is preferably from 1 to 20 mol%, more preferably from 2 to 10 mol%, and particularly preferably from 3 to 8 mol%. The degree of modification of 1 mol% or greater is advantageous in achieving good extrusion moldability. Furthermore, the degree of modification of 20 mol% or less is advantageous in that metal adhesion decreases, good flowability during melt molding is achieved, and thermal degradation due to retention or the like is less likely to occur.

As the copolymerization method of the vinyl ester-based compound and an unsaturated monomer that is copolymerizable with the vinyl ester-based compound described above, any known polymerization method, such as a solution polymerization method, an emulsion polymerization method, or a suspension polymerization method, can be used; however, usually, a solution polymerization method using an alcohol such as methanol, ethanol, or isopropyl alcohol as a solvent is performed.

As the polymerization catalyst, a known polymerization catalyst, such as an azo-based catalyst such as azobisisobutyronitrile or a peroxide catalyst such as acetyl peroxide, benzoyl peroxide, or lauroyl peroxide, can be suitably selected based on the polymerization method. Furthermore, the reaction temperature of the polymerization is selected from a range of 50°C to approximately boiling point.

The saponification can be carried out by a known method, and is usually carried out by dissolving the obtained copolymer in an alcohol in the presence of a saponification catalyst. Examples of the alcohol include methanol, ethanol, and butanol. The concentration of the copolymer in the alcohol is selected from the range of 20 to 50 mass% from the viewpoint of dissolution rate.

As the saponification catalyst, an alkali catalyst such as hydroxides of alkali metals and alcoholates such as sodium hydroxide, potassium hydroxide, sodium methylate, sodium ethylate, and potassium methylate can be used, and an acid catalyst can be also used. The used amount of the saponification catalyst is preferably from 1 to 100 mmol equivalent with respect to the amount of the vinyl ester-based compound.

The average degree of saponification of the polyvinyl alcohol-based resin (B) contained in the resin composition according to the present embodiment is preferably from 70 to 100 mol%, more preferably from 90 to 99.9 mol%, and particularly preferably from 98 to 99.8 mol%. The average degree of saponification of 70 mol% or greater is preferred because the polyvinyl alcohol-based resin is less likely to be thermally decomposed. Note that the degree of saponification of the polyvinyl alcohol-based resin described above is a value measured in accordance with JIS K 6726: 1994.

The melting point of the polyvinyl alcohol-based resin (B) is preferably from 150 to 230°C, more preferably from 160 to 225°C, and particularly preferably from 170 to 220°C. The melting point is measured by DSC in accordance with JIS K 7121.

The lower limit of the content of the polyvinyl alcohol-based resin (B) in the resin composition is not particularly limited but, from the viewpoint of functionality, the lower limit is preferably 1 mass% or greater, more preferably 1.5 mass% or greater, and particularly preferably 2 mass% or greater. Furthermore, the upper limit of the content of the polyvinyl alcohol-based resin (B) in the resin composition is not particularly limited but, from the viewpoint of moldability, the upper limit is preferably 15 mass% or less, more preferably 12.5 mass% or less, and particularly preferably 10 mass% or less.

### Acetic Acid (C)

The content of the acetic acid (C) in the resin composition is 60 mass ppm or greater, preferably 65 mass ppm or greater, more preferably 70 mass ppm or greater, and particularly preferably 75 mass ppm or greater.

The upper limit of the content of the acetic acid (C) in the resin composition is not particularly limited; however, from the viewpoints of preventing reaction with a hydroxy group of the polyvinyl alcohol-based resin (B) in the case where the resin composition is melt-kneaded and effectively suppressing increase in the resin temperature due to latent heat of vaporization, the content of the acetic acid (C) is preferably 200 mass ppm or less, more preferably 150 mass ppm or less, particularly preferably 130 mass ppm or less, and most preferably 100 mass ppm or less.

In an aspect, the content of the acetic acid (C) in the resin composition can be from 60 to 200 mass ppm, from 60 to 150 mass ppm, and the like.

The content of the acetic acid (C) in the resin composition can be adjusted by the added amount of the acetic acid.

Note that the content and the added amount of the acetic acid (C) in the resin composition may be different. For example, in the case where the added amount of the acetic acid is 60 ppm or less, the content of the acetic acid (C) in the resin composition tends to be greater than the added amount. This is because free acetic acid is generated when the polyvinyl alcohol-based resin is subjected to thermal history; however the amount of the acetic acid (C) needs to be controlled to the predetermined range. Furthermore, in the case where the added amount of the acetic acid (C) is 100 ppm or greater, the content of the acetic acid (C) in the resin composition tends to be less than the added amount. This is because, in the case where the added amount of the acetic acid (C) is 100 ppm or greater, a part of the acetic acid (C) volatilizes during melt kneading and discharged from a decompression part (vent).

In the case described above, the added amount of the acetic acid (C) is increased or decreased in a manner that the content of the acetic acid (C) in the resin composition is in the desired range.

The content of the acetic acid (C) in the resin composition can be measured by a known method. For example, the content can be determined by extracting the acetic acid (C) from the resin composition using a proper solvent, determining a mass of the extracted acetic acid using a gas-chromatograph-mass spectrometer (GC-MS), and determining the content based on the relationship with the mass of the resin composition used.

When the acetic acid (C) is added to the resin, to uniformly disperse the acetic acid (C), the acetic acid (C) is preferably mixed as a mixed solution with a solvent and not mixed as is.

As the solvent to be used to form a mixed solution with the acetic acid (C), a known solvent can be used. Typical examples thereof include ethanol, methanol, and propanol. Among these, ethanol and methanol are preferred.

In the case where the mixed solution of the acetic acid (C) and the solvent is formed, from the viewpoint of workability, the concentration of the acetic acid (C) in the mixed solution is preferably from 0.01 to 20 mass%, more preferably from 0.05 to 15 mass%, and particularly preferably from 0.1 to 10 mass%.

### Acid-Modified Polyolefin-Based Resin (D)

The resin composition according to the present embodiment can further contain an acid-modified polyolefin-based resin (D). The acid-modified polyolefin-based resin is a resin in which an acid has been introduced to a polyolefin-based resin by copolymerization or post-reaction.

As the acid-modified polyolefin-based resin (D), a known material can be used. The acid-modified polyolefin-based resin can be properly selected, and representative examples of the acid-modified polyolefin-based resin include a carboxyl group-containing modified olefin-based resin obtained by allowing chemical bonding between a polyolefin-based resin and an unsaturated carboxylic acid or anhydride thereof by an addition reaction, a grafting reaction, or the like. Among these, a maleic anhydride-modified polyolefin is more preferred, and modified polyolefin grafted with maleic anhydride is particularly preferred.

Examples of the maleic anhydride-modified polyolefin include a modified polyethylene grafted with maleic anhydride, a modified polypropylene grafted with maleic anhydride, a modified ethylene-propylene (block and random) copolymer grafted with maleic anhydride, a modified ethylene-ethyl acrylate (block and random) copolymer grafted with maleic anhydride, and a modified ethylene-vinyl acetate (block and random) copolymer grafted with maleic anhydride. One type or a mixture of two or more types selected from these is preferred.

The melting point of the acid-modified polyolefin-based resin (D) is preferably from 100 to 190°C, more preferably from 100 to 180°C, and particularly preferably from 100 to 170°C. The melting point is measured by DSC in accordance with JIS K 7121.

The melt flow rate (MFR) (in accordance with JIS K 7210; 230°C; load: 21.2 N) of the acid-modified polyolefin-based resin (D) is preferably from 0.1 to 50 g/10 min, and more preferably approximately from 0.5 to 30 g/10 min.

The lower limit of the content of the acid-modified polyolefin-based resin (D) in the resin composition is not particularly limited but, from the viewpoint of miscibility, the lower limit is preferably 0 mass% or greater, more preferably 1 mass% or greater, and particularly preferably 2 mass% or greater. Furthermore, the upper limit of the content of the acid-modified polyolefin-based resin (D) in the resin composition is not particularly limited but, from the viewpoint of economical efficiency, the upper limit is preferably 15 mass% or less, more preferably 12.5 mass% or less, and particularly preferably 10 mass% or less.

### Additional Component

The resin composition according to the present embodiment can further contain additional components besides those described above.

As the additional component, for example, to improve molding processability, physical properties, and the like, an antioxidant, a heat stabilizer, a light stabilizer, a lubricant, an antistatic agent, a nucleating agent, a plasticizer, a colorant, a UV absorber, a surfactant, an antimicrobial agent, a desiccant, an oxygen absorber, or an anti-blocking agent, a slip agent, and an inorganic/organic filler can be used.

In the case where the resin composition according to the present embodiment contains the additional component, from the viewpoints of safety and effect, the content thereof is preferably from 0.01 to 1 mass%, more preferably from 0.025 to 0.75 mass%, and particularly preferably from 0.05 to 0.5 mass%.

### Method for Producing Resin Composition

The resin composition is obtained by blending and mixing the polyolefin-based resin (A), the polyvinyl alcohol-based resin (B), and the acetic acid (C), and, as necessary, the acid-modified polyolefin-based resin (D) and the additional component.

As an aspect, a resin composition can be obtained by mixing the acetic acid (C) into a resin mixture containing the polyolefin-based resin (A) and the polyvinyl alcohol-based resin (B) and, as necessary, the acid-modified polyolefin-based resin (D). When the acetic acid (C) is mixed to the resin mixture, from the viewpoint of dispersibility, a mixed solution in which acetic acid has been mixed with a suitable solvent is preferably prepared, and this is preferably added by using a spray or the like or the resin mixture is preferably dipped into the mixed solution.

The obtained resin composition described above can be fed as is to an extruder for molding or can be formed into pellets by a known method by using a melt kneading machine, such as a single-screw extruder or a twin-screw extruder, in advance to supply the pellets to an extruder for molding. The melt molding temperature during melt extrusion described above is usually selected from a range of 150 to 300°C in many cases.

### Physical Properties of Resin Composition

The MFR of the resin composition according to the present embodiment (in accordance with JIS K 7210; 230°C; load: 21.2 N) is preferably from 0.5 to 20 g/10 min. The MFR in the range described above is advantageous in that draw-down during molding is less likely to occur, and a film having a uniform thickness tends to be obtained.

Furthermore, the resin composition fed to the molding described above can be molded into any molded article, and examples of the form include a film, a sheet, a tape, a cup, a tray, a tube, a bottle, a pipe, a filament, an extruded article with an atypical cross-section, and various irregularly-shaped molded articles.

Furthermore, in the molding, hot stretching treatment is often performed to improve physical properties of a molded article and/or to form a freely chosen target container form. Note that the hot stretching treatment means operation of uniformly molding a film, a sheet, or a parison-like molded article, which have been heated thermally uniformly, into a cup, a tray, a tube, a bottle, or a film by a chuck, a plug, vacuum force, compressed air force, blowing, or the like. Examples of this stretching method include a roll stretching method, a tenter stretching method, a tubular stretching method, a stretch blowing method, vacuum molding, pressure molding, and vacuum-pressure molding. The stretching method may be any uniaxial stretching or biaxial stretching. In the case of biaxial stretching, any of a simultaneous biaxial stretching method or a successive biaxial stretching method can be employed. The stretching temperature is usually from 60 to 170°C, and more preferably from 80 to 160°C.

Furthermore, in addition to the examples of the molded articles described above, the resin composition is typically used as at least one layer of a laminate. Hereinafter, a laminate including a layer made of the resin composition according to the present embodiment (hereinafter, also referred to as "layer according to the present embodiment") will be described in detail.

### Laminate Including Layer According to Present Embodiment

As the laminate including the layer according to the present embodiment, the resin composition described above is only required to be contained in at least one layer in the laminate. In general, a laminate including a polyolefin-based resin layer and a PVA layer and, as necessary, an adhesive resin layer, in addition to the layer according to the present embodiment, is preferred.

In the present specification, "polyolefin-based resin layer" means a layer consisting only of a polyolefin-based resin as a resin component. "PVA layer" means a layer consisting only of a polyvinyl alcohol-based resin as a resin component. "Adhesive resin layer" means a layer containing an adhesive resin.

Examples of the specific layer structure of the laminate including the layer according to the present embodiment include a polyolefin-based resin layer/layer according to the present embodiment/adhesive resin layer/PVA layer, a polyolefin-based resin layer/layer according to the present embodiment/adhesive resin layer/PVA layer/adhesive resin layer/polyolefin-based resin layer, and a polyolefin-based resin layer/layer according to the present embodiment/adhesive resin layer/PVA layer/adhesive resin layer/layer according to the present embodiment/polyolefin-based resin layer, and also a layer according to the present embodiment/PVA layer, a layer according to the present embodiment/adhesive resin layer/PVA layer, a layer according to the present embodiment/adhesive resin layer/PVA layer/adhesive resin layer/PVA layer, a layer according to the present embodiment/adhesive resin layer/PVA layer/adhesive resin layer/polyolefin-based resin layer, a layer according to the present embodiment/adhesive resin layer/PVA layer/adhesive resin layer/layer according to the present embodiment/polyolefin-based resin layer, and a polyolefin-based resin layer/adhesive resin layer/PVA layer/layer according to the present embodiment/PVA layer/adhesive resin layer/polyolefin-based resin layer.

The thickness of each layer of the laminate including the layer according to the present embodiment cannot be generalized due to the layer structure, type of the polyolefin-based resin, use and container form, and required physical properties; however, the thickness of the layer according to the present embodiment is preferably from 5 to 5000 µm, and more preferably from 30 to 1000 µm.

For an optional layer, the thickness of the PVA layer is preferably from 1 to 200 µm, and more preferably from 2 to 100 µm. The thickness of the polyolefin-based resin layer is usually from 5 to 5000 µm, and more preferably from 30 to 1000 µm. Furthermore, the thickness of the adhesive resin layer is preferably from 2 to 400 µm, and more preferably from 4 to 150 µm.

Furthermore, the thickness ratio of the layer according to the present embodiment/polyolefin-based resin layer is preferably 10/from 1 to 100, and more preferably 10/from 1 to 50. Furthermore, the thickness ratio of the layer according to the present embodiment/PVA layer is preferably 100/from 1 to 100, and more preferably 100/from 1 to 50.

### Method for Producing Laminate Including Layer According to Present Embodiment

As the method for producing a laminate including the layer according to the present embodiment, for example, formation can be performed by a similar method by using a resin that is the same type as the resin composition according to the present embodiment as a raw material. Specifically, production can be performed by a lamination method described below by using a polyolefin-based resin used for a polyolefin-based resin layer, a polyvinyl alcohol-based resin used for a PVA layer, and an adhesive resin used for an adhesive resin layer, exemplified above.

Examples of the lamination method of the laminate described above include a method of melt-extrusion-laminating the resin composition according to the present embodiment onto a polyvinyl alcohol-based resin film or sheet or the like, a method of melt-extrusion-laminating the resin composition according to the present embodiment onto a substrate made of a polyolefin layer, a method of co-extruding a polyvinyl alcohol-based resin or a polyolefin-based resin and the resin composition according to the present embodiment, and a method of dry-laminating a film or sheet or the like of a polyvinyl alcohol-based resin or a polyolefin-based resin with a film or sheet or the like of the resin composition according to the present embodiment by using an adhesive such as an organic titanium compound, an isocyanate compound, a polyester-based compound, or a polyurethane compound. The melt molding temperature during melt extrusion described above is preferably in a range of 150 to 300°C.

The laminate including the layer according to the present embodiment is used as is for materials having various forms; however, to further improve the physical properties of this laminate and to form this laminate into a target container form that is freely chosen, hot stretching treatment is preferably performed.

Note that the hot stretching treatment means operation of uniformly molding a film, a sheet, or a parison-like laminate that has been heated thermally uniformly into a cup, a tray, a tube, a bottle, or a film by a chuck, a plug, vacuum force, compressed air force, blowing, or the like.

Examples of the stretching method in the hot stretching treatment described above include a roll stretching method, a tenter stretching method, a tubular stretching method, a stretch blowing method, vacuum molding, pressure molding, and vacuum-pressure molding. In the case of biaxial stretching, any of a simultaneous biaxial stretching method or a successive biaxial stretching method can be employed. The stretching temperature is preferably from 60 to 170°C, and more preferably approximately from 80 to 160°C. Any of uniaxial stretching or biaxial stretching may be used, and a stretching ratio of as high as possible can provide a stretched molded article that has good physical properties, that does not cause pinholes, cracks, stretching unevenness, uneven thickness, delamination, or the like during stretching, and that has excellent gas barrier properties.

Furthermore, in each layer of the laminate obtained by the present embodiment, to improve molding processability, physical properties, and the like, an antioxidant, a heat stabilizer, a light stabilizer, a lubricant, an antistatic agent, a nucleating agent, a plasticizer, a colorant, a UV absorber, a surfactant, an antimicrobial agent, a desiccant, an oxygen absorber, or an anti-blocking agent, a slip agent, an inorganic/organic filler, and the like can be added in a range that does not impair the effects of the present invention.

Similarly to the laminate described above, in addition to a sheet or film form, the laminate described above can be molded into a container such as pipe/tube-like container or tank/bottle by the same molding method described above. Furthermore, the laminate described above can be molded into a container such as a bottle, a tube, a cup, or a tray, by heating the laminate again to usually approximately 60 to 170°C and stretching by the same method as described above, such as a stretch blowing method or a drawing and molding method (e.g., vacuum molding, pressure molding, and vacuum-pressure molding).

Furthermore, as necessary, the resulting laminate may be subjected to processes such as a heat treatment, a cooling treatment, rolling, printing, dry lamination, solution or melt coating, bag-making, deep drawing, box processing, tube processing, and splitting.

The laminate thus obtained is useful as various containers for general foods, seasonings such as mayonnaise and dressing, fermented foods such as fermented soybean paste, oil and fat foods such as salad oil, soup, beverages, cosmetics, pharmaceutical products, detergents, perfumes, industrial reagents, agrochemicals, fuels, and the like. Particularly, the laminate is useful for containers for semisolid foods and seasonings such as mayonnaise, ketchup, sauce, fermented soybean paste, Japanese wasabi, mustard, and dip for grilled meat, bottles and tubular containers for liquid beverages and seasonings such as salad oil, Japanese cooking sake, Japanese refined sake, beer, wine, juice, black tea, sports drinks, mineral water, and milk, cup-like containers for semisolid foods and seasonings such as fruit, jelly, pudding, yogurt, mayonnaise, fermented soybean paste, processed rice, processed foods, and soup, and tray-like containers for raw meat, processed meat products (e.g., ham, bacon, and sausage), cooked rice, and pet foods.

### Examples

The present invention will be described specifically with reference to Examples below, but the present invention is not limited to the Examples below to the extent such that the essence of the present invention is not exceeded.

Prior to the examples, the following raw materials were prepared.

### Polyolefin-Based Resin

Polyolefin-based resin 1 Polyethylene [density: 0.92 g/cm³, MFR: 1.1 g/10 min (measured in accordance with JIS K 7210); melting point: 108°C (measured by DSC in accordance with JIS K 7121); "Novatec LD YF30", available from Japan Polyethylene Corporation]
Polyolefin-based resin 2 Polypropylene [density: 0.90 g/cm³, MFR: 1.9 g/10 min (measured in accordance with JIS K 7210); melting point: 165°C (measured by DSC in accordance with JIS K 7121); "Novatec PP FY6H", available from Japan Polypropylene Corporation]

### Polyvinyl Alcohol-Based Resin (PVA-Based Resin)

1,2-Diol-modified polyvinyl alcohol-based resin [degree of saponification: 99 mol%; degree of polymerization: 450; 1,2-diol modification: 6 mol%; melting point: 188°C (measured by DSC in accordance with JIS K 7121)]

### Acid-Modified Polyolefin-Based Resin

Acid-modified polyolefin-based resin 1 Acid-modified polyethylene [density: 0.94 g/cm³, MFR: 0.3 g/10 min (measured in accordance with JIS K 7210); melting point: 133°C (measured by DSC in accordance with JIS K 7121); "Modic (trade name) H511", available from Mitsubishi Chemical Corporation]
Acid-modified polyolefin-based resin 2 Acid-modified polypropylene [MFR: 3.4 g/10 min (measured in accordance with JIS K 7210); melting point: 141°C, measured by DSC in accordance with JIS K 7121); "Modic (trade name) P674V", available from Mitsubishi Chemical Corporation]

### Example 1-1

### Preparation of Raw Material Composition

A resin mixture was prepared by mixing 900 g of the polyolefin-based resin 1 described above, 50 g of the polyvinyl alcohol-based resin, and 50 g of the acid-modified polyolefin-based resin 1. By using a micropipette, 20 µL of acetic acid (available from Wako Pure Chemical Industries, Ltd.) and 5 mL of ethanol (available from FUJIFILM Wako Pure Chemical Corporation) were weighed, and an acetic acid-ethanol mixed solution was prepared. While the resin mixture was mixed, the acetic acid-ethanol mixed solution was added by using a spray, and thus a raw material composition was obtained. In Example 1-1, the amount of acetic acid added with respect to the resin mixture was 21 mass ppm.

The composition of the raw material composition including those for Examples 1-2 to 1-4 described below is listed in Table 1.

### Preparation of Pellet

After charging the obtained raw material composition to a hopper of a twin-screw extruder, melt-kneading was performed at a screw rotational speed of 120 rpm. The resin discharged from a die was placed on a conveyor belt to allow the resin to solidify, then the resin was cut into pellet forms by using a pelletizer, and thus pellets of the resin composition of Example 1-1 were prepared. The conditions for preparing the pellets are as described below.

### [Table 1]

**Table 1**

| | Resin mixture | | | | Acetic acid-ethanol mixed solution | | Amount of acetic acid added [mass ppm] |
|---|---|---|---|---|---|---|---|
| | Polyolefin-based resin [g] | PVA-based resin [g] | Acid-modified polyolefin-based resin [g] | Total [g] | Acetic acid [µL] | Ethanol [mL] | |
| Example 1-1 | 900 | 50 | 50 | 1000 | 20 | 5 | 21 |
| Example 1-2 | 900 | 50 | 50 | 1000 | 50 | 5 | 53 |
| Example 1-3 | 900 | 50 | 50 | 1000 | 100 | 5 | 105 |
| Example 1-4 | 900 | 50 | 50 | 1000 | 500 | 5 | 525 |

### Example 1-2

Pellets of the resin composition of Example 1-2 were prepared by the same method as in Example 1-1 except that the amount of the acetic acid contained in the acetic acid-ethanol mixed solution was changed to 50 µL.

### Example 1-3

Pellets of the resin composition of Example 1-3 were prepared by the same method as in Example 1-1 except that the amount of the acetic acid contained in the acetic acid-ethanol mixed solution was changed to 100 µL.

### Example 1-4

Pellets of the resin composition of Example 1-4 were prepared by the same method as in Example 1-1 except that the amount of the acetic acid contained in the acetic acid-ethanol mixed solution was changed to 500 µL.

### Pellet Preparation Conditions

- Twin-screw extruder: IMC 160 (available from Imoto Machinery Co., Ltd.)
- Screw size: Diameter: φ20 (L/D = 25)
- Temperature setting: Hopper/bottom/center/tip = 160/200/210/210 (°C)
- Screen mesh: 90/90
- Die: 2 holes
- Discharge amount: 2 to 3 kg/h

### Evaluation of Pellet

The granulated pellets were evaluated by the following methods. The results are shown in Table 2.

### Acetic Acid Content

After the obtained pellets were micronized by cryogenic grinding treatment, 2 g of the fine powder was weight in a headspace vial. In this vial, a stirring bar and 10 mL of dimethylformamide (DMF) were added, and the vial was sealed with a polytetrafluoroethylene (PTFE) septum-aluminum cap. Stirring was performed at 70°C for approximately 1 hour, and the acetic acid in 2 g of the pellets was extracted in the DMF layer. A certain amount of the gas phase part was introduced to a gas-chromatograph-mass spectrometer (GC-MS) by using a headspace sampler. Based on a calibration curve of standard solutions, the acetic acid content in the sample was determined. Note that the details of the headspace sampler and the GC-MS used are as described below.

For the standards for quantification, after the acetic acid was weighed, the volume thereof was made up to the mark by DMF. Those obtained by step-wise dilution were used as standard solutions. In a headspace vial, 10 mL of the standard solution was collected. After a stirring bar was added, the vial was sealed by the same method performed for the measurement of the pellets, and this was used as a sample for the calibration curve.

### Headspace Sampler

- Instrument: 7697A (available from Agilent Technologies)
- Temperature (oven): 70°C
- Temperature (loop): 140°C
- Temperature (transfer line): 150°C
- Vial equilibration time: 30 min
- Loop fill pressure: 20 psi → 2 psi
- Injection loop volume: 3 mL
- Shaking: None

### Gas Chromatograph-Mass Spectrometer (GC-MS)

- GC instrument: 7890B (available from Agilent Technologies)
- MS instrument: 5977 B (quadrupole mass analyzer) (available from Agilent Technologies)
- Column: DB-WAX 30 m × 0.25 mm × 0.25 µm (available from Agilent Technologies)
- Carrier gas type, flow rate: Helium, 1 mL/min
- Temperature (oven): 40°C (5 min) → rate 10°C/min → 250°C (5 min)
- Temperature (injection): 250°C
- Temperature (auxiliary apparatus): transfer line = 250°C
- Injection mode: Split injection method
- Split ratio: 1/5
- Detector: Mass spectrometer (electron multiplier)
- Ionization method: Electron impact method
- Scanning range: SIM
- Acetic acid quantification ion (m/z 43), ion for checking (m/z 60)

### Melt Flow Rate (MFR)

The MFR was measured at a temperature of 210°C and a load of 21.2 N in accordance with JIS K 7210.

### Yellow Index (YI)

The YI of the pellets was measured by using Spectrophotometer SE 6000 (available from Nippon Denshoku Industries Co., Ltd.).

### Thermal Decomposition Temperature

Using Thermogravimetric analyzer TGA 8000 (available from Perkin Elmer), when the temperature of 2 to 8 mg of the sample was increased to 50 to 550°C (10°C/min), a temperature at which a sample weight became 90% of a weight prior to the temperature increase was measured.

Herein, the thermal decomposition temperature indicates a temperature at which the weight loss of the resin composition reaches 10% under the conditions described above. A higher thermal decomposition temperature means being more difficult to be thermally decomposed, and a lower thermal decomposition temperature means being more readily thermally decomposed. When the polyolefin-based resin is thermally decomposed by molding in a high temperature, a toxic gas such as carbon monoxide may occur. A higher thermal decomposition temperature results in better thermal stability, and it can be said that a resin composition has higher safety.

### [Table 2]

**Table 2**

| | Blending ratio in resin mixture [part] | | | Amount of acetic acid added [mass ppm] | Evaluation of resin composition | | | |
|---|---|---|---|---|---|---|---|---|
| | Polyolefin-based resin | PVA-based resin | Acid-modified polyolefin-based resin | | Acetic acid content [mass ppm] | MFR [g/10 min] | YI [-] | Thermal decomposition temperature [°C] |
| Example 1-1 | 90 | 5 | 5 | 21 | 80 | 1.4 | 1.7 | 444 |
| Example 1-2 | 90 | 5 | 5 | 53 | 90 | 1.4 | 1.8 | 448 |
| Example 1-3 | 90 | 5 | 5 | 105 | 95 | 1.5 | 2.3 | 451 |
| Example 1-4 | 90 | 5 | 5 | 525 | 140 | 1.4 | 3.2 | 454 |

From the results described above, it was found that the resin compositions of the present invention each had the low yellow index and the high thermal decomposition temperature. This indicates that the resin composition of the present invention is less likely to be colored and thermally decomposed.

### Example 2-1

### Preparation of Raw Material Composition

A resin mixture was prepared by mixing 900 g of the polyolefin-based resin 1 described above, 50 g of the polyvinyl alcohol-based resin, and 50 g of the acid-modified polyolefin-based resin 1. By using a micropipette, 100 µL of acetic acid (available from Wako Pure Chemical Industries, Ltd.) and 5 mL of ethanol (available from FUJIFILM Wako Pure Chemical Corporation) were weighed, and an acetic acid-ethanol mixed solution was prepared. While the resin mixture was mixed, the acetic acid-ethanol mixed solution was added by using a spray, and thus a raw material composition was obtained. In Example 2-1, the amount of acetic acid added with respect to the resin mixture was 105 mass ppm.

The composition of the raw material composition including those for Examples 2-2 and 2-3 described below is listed in Table 3.

### Preparation of Pellet

After charging the obtained raw material composition to a hopper of a twin-screw extruder, melt-kneading was performed at a screw rotational speed of 120 rpm. The resin discharged from a die was placed on a conveyor belt to allow the resin to solidify, then the resin was cut into pellet forms by using a pelletizer, and thus pellets of the resin composition of Example 2-1 were prepared. The conditions for preparing the pellet are as described above.

### [Table 3]

**Table 3**

| | Resin mixture | | | | Acetic acid-ethanol mixed solution | | Amount of acetic acid added [mass ppm] |
|---|---|---|---|---|---|---|---|
| | Polyolefin-based resin [g] | PVA-based resin [g] | Acid-modified polyolefin-based resin [g] | Total [g] | Acetic acid [µL] | Ethanol [mL] | |
| Example 2-1 | 900 | 50 | 50 | 1000 | 100 | 5 | 105 |
| Example 2-2 | 900 | 50 | 50 | 1000 | 50 | 5 | 53 |
| Example 2-3 | 900 | 50 | 50 | 1000 | 500 | 5 | 525 |

### Example 2-2

Pellets of the resin composition of Example 2-2 were prepared by the same method as in Example 2-1 except that the amount of the acetic acid contained in the acetic acid-ethanol mixed solution was changed to 50 µL.

### Example 2-3

Pellets of the resin composition of Example 2-3 were prepared by the same method as in Example 2-1 except that the amount of the acetic acid contained in the acetic acid-ethanol mixed solution was changed to 500 µL.

### Evaluation of Pellet

The granulated pellets were evaluated by the following methods. The results are shown in Table 4.

### Acetic Acid Content

After the obtained pellets were micronized by cryogenic grinding treatment, 2 g of the fine powder was weight in a headspace vial. In this vial, a stirring bar and 10 mL of dimethylformamide (DMF) were added, and the vial was sealed with a polytetrafluoroethylene (PTFE) septum-aluminum cap. Stirring was performed at 70°C for approximately 1 hour, and the acetic acid in 2 g of the pellets was extracted in the DMF layer. A certain amount of the gas phase part was introduced to a gas-chromatograph-mass spectrometer (GC-MS) by using a headspace sampler. Based on a calibration curve of standard solutions, the acetic acid content in the sample was determined. Note that the details of the headspace sampler and the GC-MS used are as described below.

For the standards for quantification, after the acetic acid was weighed, the volume thereof was made up to the mark by DMF. Those obtained by step-wise dilution were used as standard solutions. In a headspace vial, 10 mL of the standard solution was collected. After a stirring bar was added, the vial was sealed by the same method performed for the measurement of the pellets, and this was used as a sample for the calibration curve.

### Headspace Sampler

- Instrument: G1888 (available from Agilent Technologies)
- Temperature (oven): 70°C
- Temperature (loop): 140°C
- Temperature (transfer line): 150°C
- Vial equilibration time: 30 min
- Loop fill pressure: 20 psi → 2 psi
- Injection loop volume: 1 mL
- Shaking: None

### Gas Chromatograph-Mass Spectrometer (GC-MS)

- GC instrument: 7890B (available from Agilent Technologies)
- MS instrument: 5977 B (quadrupole mass analyzer) (available from Agilent Technologies)
- Column: DB-WAX 30 m × 0.25 mm × 0.25 µm (available from Agilent Technologies)
- Carrier gas type, flow rate: Helium, 1 mL/min
- Temperature (oven): 40°C (5 min) → rate 10°C/min → 250°C (5 min)
- Temperature (injection): 250°C
- Temperature (auxiliary apparatus): transfer line = 250°C
- Injection mode: Split injection method
- Split ratio: 1/5
- Detector: Mass spectrometer (electron multiplier)
- Ionization method: Electron impact method
- Scanning range: SIM
- Acetic acid quantification ion (m/z 43), ion for checking (m/z 60)

MFR, YI, and thermal decomposition temperature were measured as described above.

### [Table 4]

**Table 4**

| | Blending ratio in resin mixture [part] | | | Amount of acetic acid added [mass ppm] | Evaluation of resin composition | | | |
|---|---|---|---|---|---|---|---|---|
| | Polyolefin-based resin | PVA-based resin | Acid-modified polyolefin-based resin | | Acetic acid content [mass ppm] | MFR [g/10 min] | YI [-] | Thermal decomposition temperature [°C] |
| Example 2-1 | 90 | 5 | 5 | 105 | 70 | 1.5 | 2.3 | 451 |
| Example 2-2 | 90 | 5 | 5 | 53 | 70 | 1.4 | 1.8 | 448 |
| Example 2-3 | 90 | 5 | 5 | 525 | 120 | 1.5 | 3.2 | 454 |

From the results described above, it was found that the resin compositions of the present invention each had the low yellow index and the high thermal decomposition temperature. This indicates that the resin composition of the present invention is less likely to be colored and thermally decomposed.

### Example 3-1

### Preparation of Raw Material Composition

A resin mixture was prepared by mixing 900 g of the polyolefin-based resin 2 described above, 50 g of the polyvinyl alcohol-based resin, and 50 g of the acid-modified polyolefin-based resin 2. By using a micropipette, 200 µL of acetic acid (available from Wako Pure Chemical Industries, Ltd.) and 5 mL of ethanol (available from FUJIFILM Wako Pure Chemical Corporation) were weighed, and an acetic acid-ethanol mixed solution was prepared. While the resin mixture was mixed, the acetic acid-ethanol mixed solution was added by using a spray, and thus a raw material composition was obtained. In Example 3-1, the amount of acetic acid added with respect to the resin mixture was 210 mass ppm. The composition of the raw material composition is shown in Table 5.

### Preparation of Pellet

After charging the obtained raw material composition to a hopper of a twin-screw extruder, melt-kneading was performed at a screw rotational speed of 250 rpm. The resin discharged from a die was placed on a conveyor belt to allow the resin to solidify, then the resin was cut into pellet forms by using a pelletizer, and thus pellets of the resin composition of Example 3-1 were prepared. The conditions for preparing the pellets are as described below.

### [Table 5]

**Table 5**

| | Resin mixture | | | | Acetic acid-ethanol mixed solution | | Amount of acetic acid added [mass ppm] |
|---|---|---|---|---|---|---|---|
| | Polyolefin-based resin [g] | PVA-based resin [g] | Acid-modified polyolefin-based resin [g] | Total [g] | Acetic acid [µL] | Ethanol [mL] | |
| Example 3-1 | 900 | 50 | 50 | 1000 | 200 | 5 | 210 |

### Pellet Preparation Conditions

- Twin-screw extruder: TEM-18DS (available from Shibaura Machine Co., Ltd.)
- Screw size: Diameter: φ20 (L/D = 40)
- Temperature setting: C1/C2/C3/C4/C5/C6/H = 30/150/210/210/210/210/210 (°C)
- Screen mesh: 90/90
- Die: 2 holes
- Discharge amount: 4 to 5 kg/h

### Evaluation of Pellet

The granulated pellets were evaluated by the following methods. The results are shown in Table 6.

### Acetic Acid Content

After the obtained pellets were micronized by cryogenic grinding treatment, 2 g of the fine powder was weight in a headspace vial. In this vial, a stirring bar and 10 mL of dimethylformamide (DMF) were added, and the vial was sealed with a polytetrafluoroethylene (PTFE) septum-aluminum cap. Stirring was performed at 70°C for approximately 1 hour, and the acetic acid in 2 g of the pellets was extracted in the DMF layer. A certain amount of the gas phase part was introduced to a gas-chromatograph-mass spectrometer (GC-MS) by using a headspace sampler. Based on a calibration curve of standard solutions, the acetic acid content in the sample was determined. Note that the details of the headspace sampler and the GC-MS used are as described below.

For the standards for quantification, after the acetic acid was weighed, the volume thereof was made up to the mark by DMF. Those obtained by step-wise dilution were used as standard solutions. In a headspace vial, 10 mL of the standard solution was collected. After a stirring bar was added, the vial was sealed by the same method performed for the measurement of the pellets, and this was used as a sample for the calibration curve.

### Headspace Sampler

- Instrument: G1888 (available from Agilent Technologies)
- Temperature (oven): 70°C
- Temperature (loop): 140°C
- Temperature (transfer line): 150°C
- Vial equilibration time: 30 min
- Loop fill pressure: 20 psi → 2 psi
- Injection loop volume: 1 mL
- Shaking: None

### Gas Chromatograph-Mass Spectrometer (GC-MS)

- GC instrument: 7890B (available from Agilent Technologies)
- MS instrument: 5977 B (quadrupole mass analyzer) (available from Agilent Technologies)
- Column: DB-WAX 30 m × 0.25 mm × 0.25 µm (available from Agilent Technologies)
- Carrier gas type, flow rate: Helium, 1 mL/min
- Temperature (oven): 40°C (5 min) → rate 10°C/min → 250°C (5 min)
- Temperature (injection): 250°C
- Temperature (auxiliary apparatus): transfer line = 250°C
- Injection mode: Split injection method
- Split ratio: 1/5
- Detector: Mass spectrometer (electron multiplier)
- Ionization method: Electron impact method
- Scanning range: SIM
- Acetic acid quantification ion (m/z 43), ion for checking (m/z 60)

MFR, YI, and thermal decomposition temperature were measured as described above.

### [Table 6]

**Table 6**

| | Blending ratio in resin mixture [part] | | | Amount of acetic acid added [mass ppm] | Evaluation of resin composition | | | |
|---|---|---|---|---|---|---|---|---|
| | Polyolefin-based resin | PVA-based resin | Acid-modified polyolefin-based resin | | Acetic acid content [mass ppm] | MFR [g/10 min] | YI [-] | Thermal decomposition temperature [°C] |
| Example 3-1 | 90 | 5 | 5 | 210 | 150 | 1.3 | 11.7 | 413 |

From the results described above, it was found that the resin compositions of the present invention each had the low yellow index and the high thermal decomposition temperature. This indicates that the resin composition of the present invention is less likely to be colored and thermally decomposed.

Although various embodiments have been described above, it is needless to say that the present invention is not limited to such embodiments. It will be apparent to those skilled in the art that various changes and modifications can be made within the scope of the claims, and it should be understood that such changes and modifications naturally fall within the technical scope of the present invention. In addition, the constituent elements in the above-described embodiments may be arbitrarily combined without departing from the gist of the invention.

The present application is based on JP 2023-181049 filed on October 20, 2023, the content of which is incorporated herein by reference.

### Industrial Applicability

The resin composition of the present invention contains a polyolefin-based resin (A), a polyvinyl alcohol-based resin (B), and acetic acid (C), and the content of the acetic acid (C) is 60 mass ppm or greater. By such a composition, the resin composition of the present invention can exhibit excellent effects, in which less coloring occurs and thermal decomposition is less likely to occur. The laminate made of the resin composition of the present invention is, for example, useful as a container.

## Claims

1. A resin composition comprising a polyolefin-based resin (A), a polyvinyl alcohol-based resin (B), and acetic acid (C),
a content of the acetic acid (C) being 60 mass ppm or greater.

2. The resin composition according to claim 1, wherein the polyolefin-based resin (A) contains polyethylene or polypropylene.

3. The resin composition according to claim 1 or 2, wherein the polyvinyl alcohol-based resin (B) contains a modified polyvinyl alcohol-based resin.

4. The resin composition according to claim 1 or 2, further comprising an acid-modified polyolefin-based resin (D).

5. The resin composition according to claim 1 or 2, wherein the content of the acetic acid (C) is 200 mass ppm or less.

6. The resin composition according to claim 1 or 2, wherein the content of the acetic acid (C) is 150 mass ppm or less.
